Europäisches Patentamt

European Patent Office

Office européen des brevets

(11) Veröffentlichungsnummer: **0 297 615 B1**

# EUROPÄISCHE PATENTSCHRIFT

(45) Veröffentlichungstag der Patentschrift:
**19.09.90**

(21) Anmeldenummer: **88110580.3**

(22) Anmeldetag: **01.07.88**

(51) Int. Cl.⁵: **F16D 3/18**

(54) **Drehgelenkkupplung.**

(30) Priorität: **03.07.87 DE 3722097**

(43) Veröffentlichungstag der Anmeldung:
**04.01.89 Patentblatt 89/1**

(45) Bekanntmachung des Hinweises auf die Patenterteilung:
**19.09.90 Patentblatt 90/38**

(84) Benannte Vertragsstaaten:
**BE CH DE ES FR GB IT LI NL SE**

(56) Entgegenhaltungen:
BE-A- 530 791
DE-A- 1 963 755
DE-A- 2 811 607
US-A- 1 770 743
US-A- 2 974 501
US-A- 3 153 921
US-A- 3 199 311

(73) Patentinhaber: **Netzsch-Mohnopumpen GmbH,
Liebigstrasse 28, D-8264 Waldkraiburg(DE)**

(72) Erfinder: **Schlechter,Erich, Ruinenweg 1,
D-8264 Waldkraiburg(DE)**
Erfinder: **Kreidl, Johann, Gerhard-Hauptmann-Weg 61,
D-8264 Waldkraiburg(DE)**
Erfinder: **Hantschk, Günther, Tannenweg 35,
D-8264 Waldkraiburg(DE)**

(74) Vertreter: **Goetz, Rupert, Dipl.-Ing. et al, Wuesthoff &
Wuesthoff Patent- und Rechtsanwälte
Schweigerstrasse 2, D-8000 München 90(DE)**

## Beschreibung

Die Erfindung betrifft eine Drehgelenkkupplung, insbesondere an einer Gelenkwelle einer Exzenterschneckenmaschine, mit
- zwei axialkraftübertragenden Kupplungspaarungen, die je eine Kugelschale und ein darin gelagertes Kugelsegment aufweisen,
- einer drehmomentübertragenden Kupplungspaarung, die zwischen den beiden axialkraftübertragenden Kupplungspaarungen angeordnet ist,
- einem Gehäuse, das die Kupplungspaarungen umschließt und zwischen jeder der beiden axialkraftübertragenden Kupplungspaarungen und der drehmomentübertragenden Kupplungspaarung je einen ringförmigen Hohlraum aufweist, und
- einem Schmiermitteleinlaß am Gehäuse, der in einen der ringförmigen Hohlräume mündet und einen Verschluß aufweist.

Kupplungen dieser Gattung werden vornehmlich für Exzenterschneckenpumpen oder -motoren vewendet, die einen exzentrisch umlaufenden Rotor aufweisen und mit einer ortsfest gelagerten An- bzw. Abtriebswelle durch eine Gelenkwelle verbunden sind, an deren beiden Enden je eine gattungsgemäße Drehgelenkkupplung angeordnet ist.

Bei einer bekannten gattungsgemäßen Kupplung (DE-OS 1 750 739) sind die beiden in je einer Kugelschale gelagerten Kugelsegmente Bestandteile einer insgesamt im wesentlichen kugelförmigen Nabe, die in einem zwischen den Kugelsegmenten liegenden Äquatorialbereich achsparallele Nuten aufweist. Diese Nuten der Nabe sind radial nach außen offen und liegen je einer radial nach innen offenen Nut an der Innenwand des Gehäuses gegenüber. Jede Nut der Nabe nimmt zusammen mit der ihr radial gegenüberliegenden Nut des Gehäuses eine Kugel auf. Die Kugeln sind zusätzlich in einem zwischen Nabe und Gehäuse angeordneten, ringförmigen Käfig geführt, der über im wesentlichen radial angeordnete Hebel mit dem Gehäuse und der Nabe verbunden und dadurch derart gesteuert ist, daß die Mittelpunkte sämtlicher Kugeln stets in einer winkelhalbierenden Ebene zwischen den Achsen der durch die Drehgelenkkupplung miteinander zu kuppelnden Wellen liegen und somit für eine homokinetische Bewegungsübertragung zwischen den beiden Wellen sorgen.

Bei dieser bekannten Drehgelenkkupplung ist beiderseits des Käfigs je ein ringförmiger Hohlraum angeordnet. In einen dieser Hohlräume mündet eine radiale Gewindebohrung im Gehäuse, die zum Einfüllen von Schmiermittel dient und im Betrieb mit einem Gewindestopfen verschlossen ist. Die beiden genannten ringförmigen Hohlräume sind durch Nuten in den Kugelschalen mit axial äußeren Hohlräumen verbunden, die sich an die beiden Stirnseiten der Nabe anschließen.

Bei dieser bekannten Drehgelenkkupplung ist es, wenn überhaupt, nur mit großer Geduld möglich, die Hohlräume im Gehäuse vollständig mit Schmiermittel zu füllen. Im allgemeinen muß damit gerechnet werden, daß ein erhebliches Luftvolumen im Gehäuse eingeschlossen bleibt und eine auch nur annähernd vollständige Füllung mit Schmiermittel verhindert.

Entsprechendes gilt auch für eine andere bekannte Drehgelenkkupplung (DE-PS 1 142 473), bei der zwei Wellenenden in ein gemeinsames, mehrteiliges Gehäuse hineinragen und je eine kugelförmige Nabe tragen. An jeder der Naben ist in einem Äquatorialbereich eine Außenverzahnung und beiderseits davon, durch je einen ringförmigen Hohlraum getrennt, ein kugelsegmentförmiger Ring angeordnet. Die Außenverzahnung jeder Nabe greift in eine am Gehäuse ausgebildete Innenverzahnung ein, während die kugelsegmentförmigen Ringe jeder Nabe an je einer am Gehäuse befestigten Kugelschale anliegen. Bei dieser Drehgelenkkupplung ist in einem mittleren Bereich des Gehäuses ein Schmiermitteleinlaß angeordnet, der ebenfalls mit einem Gewindestopfen verschließbar ist. Der Schmiermitteleinlaß mündet in einen zentralen Hohlraum, der durch achsparallele Kanäle mit den angrenzenden ringförmigen Hohlräumen verbunden ist. Auch hier ist eine vollständige Schmiermittelfüllung kaum erreichbar, da zumindest in den vom zentralen Hohlraum weiter entfernt angeordneten ringförmigen Hohlräumen Luft eingeschlossen bleibt, die sich, wenn überhaupt, nur mit großem Zeitaufwand vom eingefüllten Schmiermittel verdrängen läßt.

Eine unvollständige Schmiermittelfüllung hat zur Folge, daß die im Gehäuse eingeschlossene Luft sich stärker als das Schmiermittel ausdehnt, wenn die Kupplung sich im Betrieb erwärmt. Dadurch kann in der Kupplung ein erheblicher Überdruck entstehen, der zur Folge hat, daß ein Teil der eingeschlossenen Luft und auch des Schmiermittels an Gehäusedichtungen vorbei nach außen gedrängt wird. Beim Abkühlen der Kupplung entsteht dann in deren Hohlräumen ein entsprechender Unterdruck, durch den Fremdstoffe aus der Umgebung in die Kupplung hineingesaugt werden können. Dies kann die Lebensdauer der Kupplung vor allem dann erheblich herabsetzen, wenn die Kupplung von abrasivem und/ oder korrosivem Arbeits- oder Fördermedium umspült ist, wie dies bei Drehgelenkkupplungen für Exzenterschneckenmaschinen häufig der Fall ist.

Der Erfindung liegt deshalb die Aufgabe zugrunde, eine Drehgelenkkupplung der eingangs beschriebenen Gattung derart weiterzubilden, daß sich ihre Hohlräume mit geringem Zeitaufwand weitgehend oder vollständig mit flüssigem Schmiermittel füllen lassen.

Die Aufgabe ist erfindungsgemäß dadurch gelöst, daß am Gehäuse, dem Schmiermitteleinlaß mindestens annähernd diagonal gegenüber, ein Luftauslaß angeordnet ist, der an den anderen der beiden ringförmigen Hohlräume angeschlossen ist und ebenfalls einen Verschluß aufweist.

Mit dieser Anordnung des Schmiermitteleinlasses und des Luftauslasses wird die Möglichkeit geschaffen, die Kupplung von unten her mit flüssigem Schmiermittel zu füllen. Das Schmiermittel erreicht den dann oben liegenden Luftauslaß erst, wenn es die ringförmigen Hohlräume beiderseits der drehmomentübertragenden Kupplungspaarung mindestens annähernd vollständig gefüllt hat. Die Anordnung des Schmiermitteleinlasses und des Luftauslasses in bezug zueinander erzwingt also eine diametrale Durchströmung der Kupplung, durch die Lufteinschlüsse sehr weitgehend, wenn nicht vollständig, beseitigt werden.

Bei der erfindungsgemäßen Drehgelenkkupplung kann, wie bei den beiden beschriebenen bekannten Kupplungen, die drehmomentübertragende Kupplungspaarung in zwei konzentrischen Kreisen angeordnete Nuten aufweisen, die sich zwischen den beiden ringförmigen Hohlräumen erstrecken und zur Drehmomentübertragung mit Gegenkörpern zusammenwirken, an deren Profil das Nutprofil angepaßt ist. Dabei können die Gegen körper Kugeln sein wie bei der erstgenannten bekannten Kupplung (DE-A 1 750 739) oder Zähne, die in als Zahnlücken ausgebildeten Nuten einer Gegenverzahnung eingreifen, wie bei der zweiten bekannten Kupplung (DE-C 1 142 473).

Bei beiden im vorstehenden beschriebenen, an sich bekannten Ausgestaltungen der erfindungsgemäßen Drehgelenkkupplung kann normalerweise damit gerechnet werden, daß zwischen den Partnern der drehmomentübertragenden Kupplungspaarung ein herstellungstechnisch bedingtes oder betriebsnotwendiges Spiel besteht, so daß das Schmiermittel mehr oder weniger schnell von einem der ringförmigen Hohlräume zum anderen strömen kann.

Besser ist es jedoch, wenn gemäß der Erfindung nahe dem Schmiermitteleinlaß und dem Luftauslaß je ein Gegenkörper fortgelassen und dadurch je eine Nut als Schmiermittelkanal zwischen den beiden ringförmigen Hohlräumen freigelassen ist. Der Verzicht auf zwei Gegenkörper, seien sie Kugeln oder Zähne, kann im allgemeinen ohne weiteres hingenommen, jedenfalls aber dadurch ausgeglichen werden, daß in den Bereichen, die zwischen den beiden Schmiermittelkanälen übrigbleiben, eine entsprechend größere Anzahl von Gegenkörpern, also beispielsweise Kugeln oder Zähnen, angeordnet wird.

Die erfindungsgemäße Drehgelenkkupplung ist vorzugsweise dadurch weiterausgestaltet, daß
- die Nuten von Zahnlücken eines in das Gehäuse eingesetzten, innenverzahnten Rings bzw. einer Außenverzahnung gebildet sind,
- die beiden als Schmiermittelkanäle ausgebildeten Nuten eine Tiefe haben, die geringer als die Zahnhöhe der Außenverzahnung ist,
- zwei Zähne der Außenverzahnung als Gegenkörper zu den Schmiermittelkanälen fortgelassen sind, und
- mindestens einer der Verschlüsse in eine Aussparung des innenverzahnten Rings eingreift, die in einen der Schmiermittelkanäle mündet.

Auf diese Weise läßt sich mit Sicherheit ausschließen, daß infolge eines Montagefehlers die vorgesehenen Verbindungen zwischen dem Schmiermitteleinlaß und dem ringförmigen Hohlraum auf einer Seite der drehmomentübertragenden Kupplungspaarung sowie zwischen dem Luftauslaß und dem ringförmigen Hohlraum auf der anderen Seite der drehmomentübertragenden Kupplungspaarung nicht hergestellt wird.

Die erfindungsgemäße Drehgelenkkupplung kann mit den eingangs beschriebenen bekannten Kupplungen ferner die Merkmale gemeinsam haben, daß jede der beiden axialkraftübertragenden Kupplungspaarungen je zwei Überströmkanäle aufweist, die einander mindestens annähernd diametral gegenüberliegend den angrenzenden ringförmigen Hohlraum mit einem axial äußeren Hohlraum verbinden. Diese an sich bekannte Ausgestaltung kann erfindungsgemäß dadurch weitergebildet sein, daß
- die Überströmkanäle ebenso wie die Außenverzahnung am Kugelsegment ausgebildet sind, und
- die beiden Stellen, an denen je ein Zahn der Außenverzahnung fortgelassen ist, mindestens annähernd in der gleichen diametralen Ebene liegen wie die Überströmkanäle.

Damit wird erreicht, daß immer dann, wenn der Schmiermitteleinlaß unten liegt, nicht nur einer der Schmiermittelkanäle, sondern auch die zu den axial äußeren Hohlräumen führenden Überströmkanäle unten liegen und dementsprechend die beiden übrigen Überströmkanäle zusammen mit dem übrigen Schmiermittelkanal ebenso wie der Luftauslaß oben lie gen. Auf diese Weise ist eine sehr weitgehende, wenn nicht vollständige, Füllung nicht nur der ringförmigen Hohlräume unmittelbar beiderseits der drehmomentübertragenden Kupplungspaarung, sondern auch der axial äußeren Hohlräume ohne großen Zeitaufwand erreichbar.

Dabei ist es ferner vorteilhaft, wenn die Überströmkanäle einen größeren Strömungsquerschnitt haben als die ringförmigen Hohlräume auf jeder Seite der drehmomentübertragenden Kupplungspaarung.

Schließlich ist es vorteilhaft, wenn der Schmiermitteleinlaß und der Luftauslaß gleich gestaltet und mit gleichen Verschlüssen versehen sind.

Ein Ausführungsbeispiel mit weiteren Einzelheiten der Erfindung wird im folgenden anhand schematischer Zeichnungen näher erläutert. Es zeigt:

Fig. 1 eine Drehgelenkkupplung einer Exzenterschneckenpumpe in einem axialen Schnitt,
Fig. 2 Teile der Drehgelenkkupplung im gleichen axialen Schnitt, und

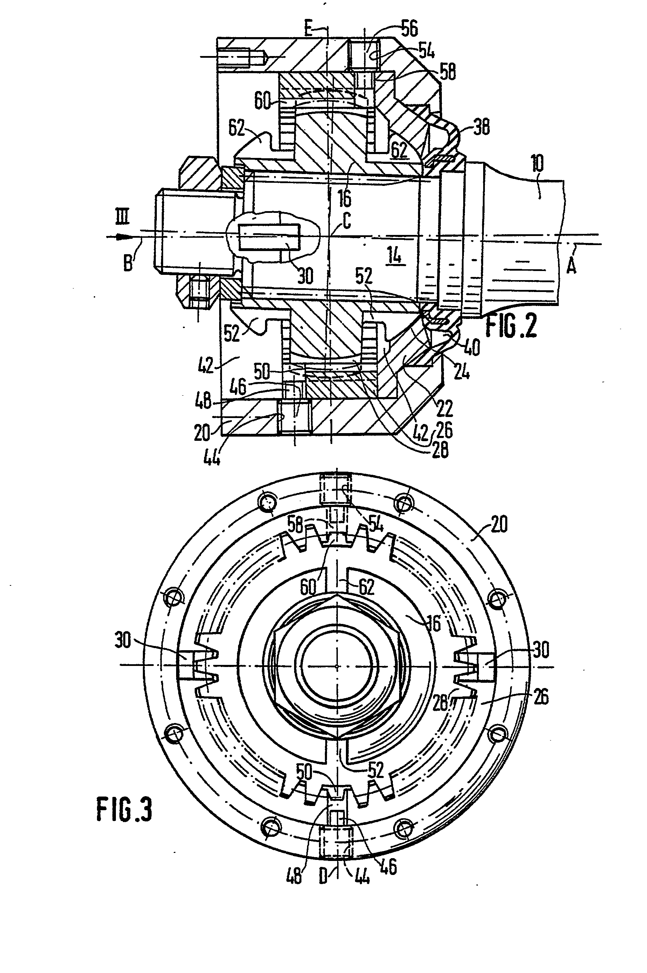

Fig. 3 die Ansicht in Richtung des Pfeils III in Fig. 2.

Die dargestellte Drehgelenkkupplung verbindet ein Ende einer Gelenkwelle 10 mit einem Ende eines schneckenförmigen Rotors 12 einer Exzenterschneckenpumpe. Die Gelenkwelle 10 ist an ihrem nicht dargestellten Ende durch eine zweite, im wesentlichen gleiche Drehgelenkkupplung mit einer ortsfest gelagerten Antriebswelle verbunden.

An dem dargestellten Ende der Gelenkwelle 10 ist ein Zapfen 14 mit Vielnutprofil ausgebildet, auf dem eine im wesentlichen kugelförmige Nabe 16 befestigt ist. Am Ende des Rotors 12 ist ein Bund 18 ausgebildet, an dem ein Gehäuse 20 befestigt ist.

Die geometrischen Achsen A und B der Gelenkwelle 10 und des Rotors 12 schneiden sich in einem Punkt C, der den Mittelpunkt der gesamten Drehgelenkkupplung bildet. Im Betrieb bewegt sich die Achse A der Gelenkwelle 10 auf einer Kegelmantelfläche, deren Spitze der Mittelpunkt der nicht dargestellten zweiten Drehgelenkkupplung ist; die Achse B des Rotors 12 bewegt sich hingegen auf einer Zylindermantelfläche. In jeder Stellung der beiden Achsen A und B ist ihre gemeinsame Ebene eine diametrale Ebene D. Durch den Mittelpunkt C erstreckt sich eine zur Achse B des Rotors 12 normale Mittelebene E.

Innerhalb des Gehäuses 20 sind zwei Kugelschalen 22 in bezug auf den Rotor 12 zentriert und in bezug auf die Mittelebene E symmetrisch angeordnet. Die beiden Kugelschalen 22 bilden zusammen mit je einem an der Nabe 16 ausgebildeten Kugelsegment 24 je eine axialkraftübertragende Kupplungspaarung 22, 24. Die aneinanderliegenden Flächen der Kugelschalen 22 und Kugelsegmente 24 sind sphärische Gleitflächen mit dem Mittelpunkt C.

Zwischen den beiden Kugelschalen 22 ist ein innenverzahnter Ring 26 zentrisch in bezug auf die Achse B und symmetrisch in bezug auf die Mittelebene E im Gehäuse 20 befestigt. Der innenverzahnte Ring 26 bildet zusammen mit einer an der Nabe 16 zwischen den beiden Kugelsegmenten 24 ausgebildeten Außenverzahnung 28 eine drehmomentübertragende Kupplungspaarung 26, 28. Relativdrehungen zwischen dem Gehäuse 20, den Kugelschalen 22 und dem innenverzahnten Ring 26 sind durch in gleichmäßigen Umfangsabständen im Gehäuse 20 angeordnete Paßfedern 30 verhindert.

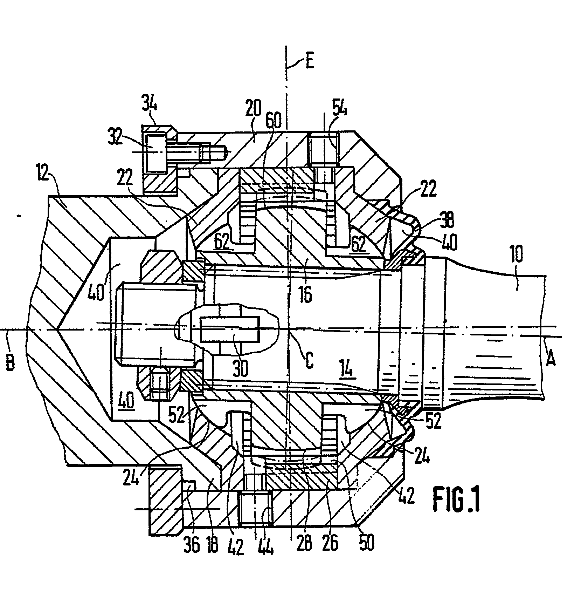

Die gesamte Drehgelenkkupplung ist in axialer Richtung durch Schrauben 32 zusammengehalten, mit denen ein den Bund 18 übergreifender Ring 34 am Gehäuse 20 befestigt ist. Zwischen dem Ring 34 und dem Bund 18 ist eine Ringdichtung 36 eingespannt; auf der anderen, in Fig. 1 und 2 rechten Seite der Drehgelenkkupplung dichtet eine Manschette 38 das Gehäuse 20 gegen die Gelenkwelle 10 ab.

Innerhalb des Gehäuses 20 ist axial außerhalb der beiden Kugelschalten 22 je ein äußerer Hohlraum 40 ausgebildet. Diese beiden Hohlräume 40 sind ferner durch je eine Stirnseite der Nabe 16 begrenzt. Der in Fig. 1 linke Hohlraum 40 ist außerdem durch den Rotor 12 begrenzt, während der in Fig. 1 rechte Hohlraum 40 zusätzlich durch die Manschette 38 begrenzt ist. Axial innerhalb jeder der beiden Kugelschalen 22 ist je ein ringförmiger Hohlraum 42 angeordnet.

Soweit bisher beschrieben, stimmt die dargestellte Drehgelenkkupplung mit der aus der EP-B-O 133 325 bekannten überein. Bei dieser werden die Hohlräume 40 und 42 vor dem Zusammenbau teilweise mit Schmiermittel gefüllt.

Im Gegensatz dazu soll bei der dargestellten Drehgelenkkupplung jeder der Hohlräume 40 und 42 nach dem Zusammenbau, ehe die Drehgelenkkupplung in Betrieb genommen wird, vollständig mit Schmiermittel gefüllt werden.

Zu diesem Zweck weist das Gehäuse 20 an seiner in der abgebildeten Stellung unteren Seite einen Schmiermitteleinlaß 44 auf, der von einer radialen Gewindebohrung gebildet und mit einem eingeschraubten Verschluß 46 dicht verschlossen ist. Der Verschluß 46 hat ein zapfenartiges, in bezug auf das Gehäuse 20 radial inneres Ende, das in eine radiale Aussparung 48 des innenverzahnten Rings 26 ein greift. An die Aussparung 48 schließt sich ein zur Achse B des Rotors 12 paralleler Schmiermittelkanal 50 an, der von einer Zahnlücke zwischen zwei Zähnen des innenverzahnten Rings 26 gebildet ist. Im Bereich dieser Zahnlücke fehlt an der Außenverzahnung 28 ein Zahn, so daß der Schmiermittelkanal 50 völlig freigehalten ist. Die Zahnlücke, die den Schmiermittelkanal 50 bildet, hat eine in radialer Richtung gemessene Höhe, die geringer ist als die Zahnhöhe der Außenverzahnung 28. Infolgedessen ist es ausgeschlossen, den innenverzahnten Ring 26 so zu montieren, daß einer der Zähne der Außenverzahnung 28 in den Schmiermittelkanal 50 eingreift.

Der Schmiermittelkanal 50 ist mit seinen beiden Enden unmittelbar an einen radial äußeren Bereich je eines der beiden ringförmigen Hohlräume 42 angeschlossen. In derselben diametralen Ebene D wie der Schmiermittelkanal 50 liegen zwei Überströmkanäle 52, die von einem radial inneren Bereich je eines der beiden ringförmigen Hohlräume 42 ausgehend in je eine der Kugelschalen 22 eingearbeitet sind und in je einen der axial äußeren Hohlräume 40 münden.

Dem Schmiermitteleinlaß 44 diagonal gegenüber weist das Gehäuse 20 einen Luftauslaß 54 auf, der von einer radialen Gewindebohrung gleicher Größe wie der Schmiermitteleinlaß 44 gebildet und ebenfalls mit einem eingeschraubten Verschluß 56 dicht verschlossen ist. Der Luftauslaß 54 liegt in derselben diametralen Ebene D wie der Schmiermitteleinlaß 44, ist jedoch uber eine Aussparung 58 an denjenigen ringförmigen Hohlraum 42 angeschlossen, der mit dem Schmiermitteleinlaß 44 keine unmittelbare radiale Verbindung hat.

Die beiden ringförmigen Hohlräume 42 sind diametral gegenüber dem Schmiermittelkanal 50 durch einen Luftaustritts- und Schmiermittelkanal 60 miteinander verbunden. In derselben diametralen Ebene D wie dieser Luftaustritts- und Schmiermittelkanal 60 ist ein Paar Überströmkanäle 62 angeordnet, die je einen der axial äußeren Hohlräume 40 mit dem angrenzenden ringförmigen Hohlraum 42 verbinden.

**Patentansprüche**

1. Drehgelenkkupplung, insbesondere an einer Gelenkwelle einer Exzenterschneckenmaschine, mit
   – zwei axialkraftübertragenden Kupplungspaarungen (22, 24), die je eine Kugelschale (22) und ein darin gelagertes Kugelsegment (24) aufweisen,
   – einer drehmomentübertragenden Kupplungspaarung (26, 28), die zwischen den beiden axialkraftübertragenden Kupplungspaarungen (22, 24) angeordnet ist,
   – einem Gehäuse (20), das die Kupplungspaarungen (22, 24; 26, 28) umschließt und zwischen jeder der beiden axialkraftübertragenden Kupplungspaarungen (22, 24) und der drehmomentübertragenden Kupplungspaarung (26, 28) je einen ringförmigen Hohlraum (42) aufweist, und
   – einem Schmiermitteleinlaß (44) am Gehäuse (20), der in einen der ringförmigen Hohlräume (42) mündet und einen Verschluß (46) aufweist,
   – wobei die drehmomentübertragende Kupplungspaarung (26, 28) in zwei konzentrischen Kränzen angeordneten Nuten aufweist, die sich zwischen den beiden ringförmigen Hohlräumen (42) erstrecken und zur Drehmomentübertragung mit Gegenkörpern zusammenwirken, an deren Profil das Nutprofil angepaßt ist, dadurch gekennzeichnet, daß
– am Gehäuse (20), dem Schmiermitteleinlaß (44) mindestens annähernd diagonal gegenüber, ein Luftauslaß (54) angeordnet ist, der an den anderen der beiden ringförmigen Hohlräume (42) angeschlossen ist und ebenfalls einen Verschluß (56) aufweist, und
– nahe dem Schmiermitteleinlaß (44) und dem Luftauslaß (54) je ein Gegenkörper fortgelassen und dadurch je eine Nut als Schmiermittelkanal (50 bzw. 60) zwischen den beiden ringförmigen Hohlräumen (42) freigelassen ist.

2. Drehgelenkkupplung nach Anspruch 1, dadurch gekennzeichnet, daß
– die Nuten von Zahnlücken eines in das Gehäuse (20) eingesetzten, innenverzahnten Rings (26) bzw. einer Außenverzahnung (28) gebildet sind,
– die beiden als Schmiermittelkanäle (50, 60) ausgebildeten Nuten eine Tiefe haben, die geringer als die Zahnhöhe der Außenverzahnung (28) ist,
– zwei Zähne der Außenverzahnung (28) als Gegenkörper zu den Schmiermittelkanälen (50, 60) fortgelassen sind, und
– mindestens einer der Verschlüsse (46, 56) in eine Aussparung (48 bzw. 58) des innenverzahnten Rings (26) eingreift, die in einen der Schmiermittelkanäle (50, 60) mündet.

3. Drehgelenkkupplung nach Anspruch 2, bei der jede der beiden axialkraftübertragenden Kupplungspaarungen (22, 24) je zwei Überströmkanäle (52, 62) aufweist, die einander mindestens annähernd diametral gegenüberliegend den angrenzenden ringförmigen Hohlraum (42) mit einem axial äußeren Hohlraum (40) verbinden, dadurch gekennzeichnet, daß
– die Überströmkanäle (52, 62) ebenso wie die Außenverzahnung (28) am Kugelsegment (24) ausgebildet sind, und
– die beiden Stellen, an denen je ein Zahn der Außenverzahnung (28) fortgelassen ist, mindestens annähernd in der gleichen diametralen Ebene (D) liegen wie die Überströmkanäle (52, 62).

4. Drehgelenkkupplung nach Anspruch 3, dadurch gekennzeichnet, daß die überströmkanäle (52, 62) einen größeren Strömungsquerschnitt haben als die ringförmigen Hohlräume (42) auf jeder Seite der drehmomentübertragenden Kupplungspaarung (26, 28).

5. Drehgelenkkupplung nach einem der Ansprüche 1 bis 4, dadurch gekennzeichnet, daß der Schmiermitteleinlaß (44) und der Luftauslaß (54) gleich gestaltet und mit gleichen Verschlüssen (46 bzw. 56) versehen sind.


**Claims**

1. Rotary universal joint, in particular on a cardan shaft of an eccentric screw machine comprising
– two axial-force-transmitting joint pairings (22, 24), each comprising a ball shell (22) and a ball segment (24) mounted therein,
– a torque-transmitting joint pairing (26, 28) which is arranged between the two axial-force-transmitting joint pairings (22, 24),
– a housing (20) which encloses the joint pairings (22, 24; 26, 28) and comprises between each of the two axial-force-transmitting joint pairings (22, 24) and the torque-transmitting joint pairing (26, 28) in each case an annular cavity (42) and
– a lubricant inlet (44) at the housing (20) which opens into one of the annular cavities (42) and comprises a closure means (46),
– the torque-transmitting joint pairing (26, 28) having grooves which extend between the two annular cavities (42) and for torque transmission cooperate with counter bodies to the profile of which the groove profile is adpated, characterized in that on the housing (20) at least approximately diagonally opposite the lubricant inlet (44) an air outlet (54) is arranged which is connected to the other of the two annular cavities (42) and likewise comprises a closure means (56), and
– adjacent the lubricant inlet (44) and the air outlet (54) in each case one counter body is omitted and thereby a respective groove left free as lubricant passage (50 or 60) between the two annular cavities (42).

2. Rotary universal joint according to claim 1, characterized in that
– the grooves are formed by tooth gaps of an internally toothed ring (26) inserted into the housing (20) or an outer toothing (28),
– the two grooves formed as lubricant passages (50, 60) have a depth which is less than the tooth height of the outer toothing (28),
– two teeth of the outer toothing (28): as counter bodies to the lubricant passages (50, 60) are omitted and
– at least one of the closure means (46, 56) engages into a cutout (48, 58) of the internally toothed ring (26) which opens into one of the lubricant passages (50, 60).

3. Rotary universal joint according to claim 2 in which each of the two axial-force-transmitting joint pairings (22, 24) comprises two overflow passages (52, 62) which lie at least approximately diametrically opposite each other and connect the adjoining annular cavity (42) to an axially outer cavity (40), characterized in that
– the overflow passages (52, 62) are formed just like the outer toothing (28) on the ball segment (24) and
– the two points at each of which a tooth of the outer toothing (28) is omitted lie at last approximately in the same diametrical plane (D) as the overflow passages (52, 62).

4. Rotary universal joint according to claim 3, characterized in that the overflow passages (52, 62) have a greater flow cross-section than the annular cavities (42) on each side of the torque-transmitting coupling pairing (26, 28).

5. Rotary universal joint according to any one of claims 1 to 4, characterized in that the lubricant inlet (44) and the air outlet (54) have the same shape and are provided with identical closure means (45; 55).

## Revendications

1. Accouplement articulé rotatif, notamment sur un arbre articulé d'une machine à vis sans fin excentrique, comportant:

— deux paires d'éléments coupleurs (22, 24) de transmission de force axiale, qui comportent chacune une coquille sphérique (22) et un segment sphérique (24) monté dans celle-ci,

— une paire d'éléments coupleurs (26, 28) de transmission de couple, qui est disposée entre les deux paires d'éléments coupleurs (22, 24) de transmission de force axiale,

— un carter (20), qui entoure les paires d'éléments coupleurs (22, 24; 26, 28) et qui comporte, entre chacune des deux paires d'éléments coupleurs (22, 24) de transmission de force axiale et la paire d'éléments coupleurs (26, 28) de transmission de couple, respectivement/une cavité de forme annulaire (42), et

— une entrée de lubrifiant (44) dans le carter (20), qui débouche dans une des cavités (42) de forme annulaire et qui comporte un obturateur (46),

— la paire d'éléments coupleurs (26, 28) de transmission de couple comportant des rainures formées dans deux couronnes concentriques, qui s'étendent entre les deux cavités (42) de forme annulaire et qui coopèrent, pour une transmission de couple, avec des corps conjugués au profil desquels est adapté le profil de rainure,

— caractérisé en ce que:

— il est prévu dans le carter (20) une sortie d'air (54) qui est située, au moins approximativement en diagonale, en regard de l'entrée de lubrifiant (44) et qui est reliée à l'autre des deux cavités (52) forme annulaire, et qui comporte également un obturateur (56), et

— un corps conjugué est omis respectivement à proximité de l'entrée de lubrifiant (44) et de la sortie d'air (54) et ainsi une rainure est libérée respectivement pour former un canal de lubrifiant (50, 60) entre les deux cavités (42) de forme annulaire.

2. Accouplement articulé rotatif selon la revendication 1, caractérisé en ce que:

— les rainures sont formées par des intervalles entre dents d'un anneau à denture intérieure (26), monté dans le carter (20), ou bien d'une denture extérieure (28),

— les deux rainures constituant des canaux de lubrifiant (50, 60), ont une profondeur qui est plus petite que la hauteur de dents de la denture extérieure (28),

— deux dents de la denture extérieure (28), constituant des corps conjugués pour les canaux de lubrifiant (50, 60), sont omises, et

— au moins un des obturateurs (46, 56) s'accroche dans un évidement (48, 58) de l'anneau à denture intérieure (26), qui débouche dans un des canaux de lubrifiant (50, 60).

3. Accouplement articulé rotatif selon la revendication 2, dans lequel chacune des deux paires d'éléments coupleurs (22, 24) de transmission de force axiale comporte respectivement deux canaux de décharge (52, 62), qui relient entre elles, dans des positions au moins approximativement diamétralement opposées, la cavité annulaire adjacente (42) avec une cavité axialement extérieure (40), et

— caractérisé en ce que:

— les canaux de décharge (52, 62) sont formés, de même que la denture extérieure (28), dans le segment sphérique (24) et

— les deux endroits, où respectivement une dent de la denture extérieure (28) est omise, sont situés au moins approximativement dans le même plan diamétral D que les canaux de décharge (52, 62).

4. Accouplement articulé rotatif selon la revendication 3, caractérisé en ce que les canaux de décharge (52, 62) ont une plus grande section de passage que les cavités (42) de forme annulaire de chaque côté de la paire d'éléments coupleurs (26, 28) de transmission de couple.

5. Accouplement articulé rotatif selon une des revendications 1 à 4, caractérisé en ce que l'entrée de lubrifiant (44) et la sortie d'air (54) ont la même forme et sont pourvues d'obturateurs identiques (46, 56).

FIG.1

FIG.2

FIG.3